# EUROPÄISCHE PATENTSCHRIFT

(11) **EP 3 172 287 B1**
(45) Veröffentlichungstag und Bekanntmachung des Hinweises auf die Patenterteilung: **26.12.2018**
(21) Anmeldenummer: 15747769.6
(22) Anmeldetag: 24.07.2015
(51) Int. Cl.: C09J 7/21, B32B 5/02, B32B 27/12, B32B 37/12, B32B 38/04

(54) **VERWEDNUNG EINES KLEBEBANDES ALS KABELWICKELBAND**
USE OF AN ADHESIVE TAPE FOR BUNDLING CABLES
UTILISATION D' UNE BANDE ADHÉSIVE POUR LE BANDAGE DE FAISCEAUX DE CÂBLES

(30) Priorität: 25.07.2014 DE 102014110535
(43) Veröffentlichungstag der Anmeldung: 31.05.2017
(73) Patentinhaber: certoplast Technische Klebebänder GmbH, 42285 Wuppertal (DE)
(72) Erfinder: RAMBUSCH, René, 42285 Wuppertal (DE)
(74) Vertreter: Nunnenkamp, Jörg
(86) Internationale Anmeldenummer: PCT/EP2015/067070
(87) Internationale Veröffentlichungsnummer: WO 2016/012617

(56) Entgegenhaltungen:
- EP-A1- 1 602 699
- EP-A1- 2 826 828
- EP-A2- 1 108 769
- DE-A1-102011 005 763

## Beschreibung

Die Erfindung betrifft ein Klebeband, wonach ein perforierter Träger aus Vlies wenigstens einseitig mit einem Klebstoff beschichtet wird.

Ein Klebeband mit einem Folienträger ist durch die DE 20 2006 010 886 U1 bekannt geworden. An dieser Stelle wird ein mehrschichtiger Aufbau des Trägers verfolgt, welcher beidseitig mit einem Haftklebstoff beschichtet ist. Das Klebeband weist an mindestens einer Stelle eine Sollbruchstelle auf. Tatsächlich können an dieser Stelle mehrere Sollbruchstellen realisiert sein, die durch Perforation, insbesondere durch Lochung, Stanzung oder Schnitte erzeugt werden. Die einzelnen Schichten bestehen aus einem Kunststoff, bspw. ausgewählt aus Polyester, Polyamid, Polyethylen, Polypropylen oder Polyurethan. Dabei handelt es sich jeweils um Folien.

Bei einem Klebeband des eingangs beschriebenen Aufbaus entsprechend der EP 1 108 769 A2 wird so vorgegangen, dass der Träger aus Vlies mit einzelnen Schwächungszonen ausgerüstet wird, um ein Einreißen zu ermöglichen. Bei den Schwächungszonen handelt es sich um solche, die durch thermisches Schmelzen des Trägers aus dem Vlies erzeugt werden.

Im Rahmen der EP 1 602 699 A1 wird die Verwendung eines einseitig selbstklebend ausgerüsteten Klebebandes als Entlüftungsband beschrieben. Das Klebeband verfügt über einen Träger aus Vlies, auf den einseitig eine Heißschmelzklebemasse aufgebracht wird. Abschließend wird das Klebeband mit heißen Nadeln perforiert. Dadurch wird eine bestimmte Luftdurchlässigkeit trägerseitig erreicht.

Durch das Gebrauchsmuster DE 94 01 037 U1 ist ein Klebeband bekannt, mit dessen Hilfe Kabelsätze in PKW umwickelt werden können. Das Klebeband verfügt über einen Träger mit einer aufgebrachten Klebebeschichtung, wobei der bandförmige Träger aus einem Nähvlies besteht. Dazu ist das Vliesmaterial mit einer Vielzahl parallel zueinander verlaufender sowie eingenähter Nähte ausgerüstet.

Neben solchen allgemein eingesetzten Klebebändern für vielfältige Verwendungen sind Wickelbänder zum Umwickeln von Kabeln in Automobilen in vielfältiger Gestaltung bekannt. Für solche Wickelbänder gilt, dass sie einerseits den mechanischen Beanspruchungen im Automobil widerstehen müssen. Andererseits ist es erforderlich, dass die fraglichen Wickelbänder gegenüber Säuren, Benzin, Öl etc. resistent sind. Schließlich müssen derartige Wickelbänder auch die im Automobil herrschenden Temperaturen beherrschen, also typischerweise Temperaturen bis zu 80° C und in Einzelfällen sogar noch mehr. Um die Verarbeitung solcher Wickelbänder zu gewährleisten, wird oftmals deren Handeinreißbarkeit in Querrichtung gefordert.

In diesem Zusammenhang sind ganz verschiedene Ansätze im Stand der Technik bekannt. So befasst sich die EP 0 942 057 B2 mit einem Klebeband mit einem bandförmigen Spinnvliesträger auf Polyesterbasis. Die Reißdehnung des Spinnvliesträgers ist auf Werte unterhalb von 50 % beschränkt.

Daneben beschreibt die EP 2 128 212 A2 ein Klebeband mit textilem Träger für die Kabelbandagierung. Hier ist der Träger aus mindestens einer Lage eines vorverfestigten Vlieses aufgebaut. Dabei handelt es sich bspw. um ein Spinnvlies, welches mit einer Vielzahl von Fäden übernäht ist. Dadurch soll primär die erforderliche Festigkeit in Längsrichtung zur Verfügung gestellt werden, wobei zugleich die Reißbarkeit in Querrichtung nach wie vor gefordert wird.

Ein Klebeband mit einem bandförmigen Vliesträger zur Bündelung von Kabeln in Automobilen, bei dem der Vliesträger durch Luft- oder Wasserstrahlen vernadelt ist, wird in der EP 1 123 958 A2 beschrieben. Bei dem Vliesträger handelt es sich um ein vernadeltes Stapelvlies. Die Fasern zur Vliesherstellung können als Synthesefasern wie z. B. aus Polyester, Polyamid und/oder Polypropylen ausgelegt sein.

Im Rahmen der DE 101 49 071 A1 geht es um ein Verfahren zur Ummantelung von langgestrecktem Gut wie insbesondere Kabelsätzen. Die an dieser Stelle vorgesehene Eindeckung und/oder das Trägermaterial für das Klebeband kann als Gewebe, Gewirke oder auch Vlies ausgelegt sein. Außerdem sind Schwächungslinien in Form von Perforationen vorgesehen.

Bei der DE 10 2011 005 200 A1 geht es um ein Klebeband zum Ummanteln von langgestrecktem Gut wie insbesondere Kabelsätzen und ein Verfahren zur Ummantelung. Um die Handeinreißbarkeit zu optimieren, können Perforationen vorhanden sein.

Im nächstliegenden Stand der Technik nach der DE 10 2011 005 763 A1 wird ein Klebeband zum Ummanteln von langgestrecktem Gut wie Kabelsätzen in einem Automobil beschrieben. Bei dem Trägermaterial handelt es sich um ein Laminat, welches aus einem textilen Träger in Form eines Stapelfaservlieses oder Spinnvlieses und zusätzlich einer auf der Unterseite befindlichen Folie gebildet wird. Der Vliesträger kann seinerseits mechanisch, thermisch und/oder chemisch verfestigt sein. Außerdem kommt eine Klebemasse auf Basis von Naturkautschuk, Synthesekautschuk oder Acrylat zum Einsatz. Zusätzliche Schwächungslinien rechtwinklig zur Laufrichtung des Klebebandes sollen ein einfaches Durchtrennen ermöglichen.

Schließlich kennt der Stand der Technik die Verwendung eines einseitig selbstklebend ausgerüsteten Klebebandes als Entlüftungsband durch die DE 10 2004 027 557 A1. In diesem Fall ist ein Träger einseitig mit einer Heißschmelzklebemasse ausgerüstet. Das Klebeband wird mit Hilfe von heißen Nadeln perforiert, welche auch die Kleberbeschichtung durchdringen. Als Trägermaterial kann auch ein Vlies zum Einsatz kommen. Da sowohl der Träger als auch die Kleberbeschichtung perforiert sind, werden bestimmte Luftdurchlässigkeiten erreicht, die für den beschriebenen Verwendungszweck besonders günstig sind.

Der Stand der Technik kann nicht in allen Aspekten zufriedenstellen. So wird bei Wickelbändern zum Umwickeln von Kabeln in Automobilen, welche den primären Einsatzzweck des erfindungsgemäßen Klebebandes darstellen, nicht nur die erforderliche chemische und mechanische sowie Temperaturbeständigkeit gefordert. Sondern hier kommt es grundsätzlich auch auf eine gute Handeinreißbarkeit an, die typischerweise dann gegeben ist, wenn in Querrichtung des hergestellten Klebebandes Reißkräfte von in etwa 10 N/cm beobachtet werden.

Sämtliche Maßnahmen zur Erhöhung der Festigkeit des Klebebandes, wie bspw. ein Übernähen mit Längs- und/oder Querfäden im Sinne eines Nadelvlieses wirken diesbezüglich kontraproduktiv. Das gleiche gilt, wenn der Träger anderweitig verfestigt wird, bspw. mit einem Bindemittel oder durch Vernadeln. Jedenfalls lassen sich die widerstreitenden Zielsetzungen nur sehr schwer miteinander vereinbaren, und zwar unter gleichzeitiger Berücksichtigung eines konkurrenzfähigen Preises. Hier will die Erfindung insgesamt Abhilfe schaffen.

Der Erfindung liegt das technische Problem zugrunde, ein Verfahren zur Herstellung eines Klebebandes und insbesondere eines Wickelbandes zum Umwickeln von Kabeln in Automobilen anzugeben, mit dessen Hilfe nicht nur ein für den beschriebenen Einsatzzweck prädestiniertes Klebeband bei geringen Kosten zur Verfügung gestellt wird, sondern in diesem Zusammenhang zugleich die notwendige Festigkeit in Längsrichtung mit einer einfachen Möglichkeit zum Quereinreißen zur Verfügung gestellt wird.

Zur Lösung dieser technischen Problemstellung ist Gegenstand der Erfindung die Verwendung eines Klebebandes nach Anspruch 1.

Erfindungsgemäß findet also die Herstellung des Klebebandes derart statt, dass die Schritte "Verfestigung - Perforation - Beschichtung" in dieser Reihenfolge durchlaufen werden. Alternativ hierzu kann auch mit der Verfahrensabfolge "Perforation - Verfestigung - Beschichtung" gearbeitet werden, was mit dem Zusatz "oder umgekehrt" ausgedrückt wird. Im letztgenannten Fall wird man dabei meistens so vorgehen, dass die der Perforation vorangestellte Verfestigung in der Regel mechanisch erfolgt. Dadurch können die mechanische Verfestigung einerseits und die Perforation andererseits aneinander angepasst werden. Denkbar ist es beispielsweise, für eine mechanische Verfestigung nur in den Bereichen zu sorgen, die außerhalb der anschließend einzubringenden Perforationen angesiedelt sind. Grundsätzlich kann dies natürlich auch mit einer chemischen Verfestigung erfolgen, die den Träger in der Regel sektionsweise erfasst, wobei anschließend zu perforierende Sektionen bei der chemischen Verfestigung ausgespart werden. Das heißt, die Verfestigung erfolgt generell derart, dass der Träger lediglich sektionsweise verfestigt wird, wobei perforierte oder zu perforierende Sektionen ausgespart werden. Generell kann der Träger natürlich auch vollflächig verfestigt werden.

Im Rahmen der Erfindung kommt also ein speziell ausgerüsteter Vliesträger zum Einsatz, nämlich ein solcher, der mechanisch und/oder chemisch verfestigt wird. Im Anschluss an die Verfestigung erfährt der Träger aus Vlies bzw. Vliesträger eine spezielle Ausrüstung der Gestalt, dass der Träger perforiert wird. Das alles geschieht, bevor auf den solchermaßen perforierten Träger zumindest einseitig der Klebstoff aufgetragen wird bzw. die einseitige Beschichtung mit dem Klebstoff erfolgt.

Das heißt, im Gegensatz zu der Lehre nach der DE 10 2004 027 557 A1 durchdringen die Perforationen die Beschichtung mit dem Klebstoff im Allgemeinen nicht, sondern beschränken sich auf den Träger. Hierbei geht die Erfindung von der Erkenntnis aus, dass nahezu ausschließlich der Träger die mechanischen Eigenschaften des hergestellten Klebebandes im Hinblick auf Dehnung, Reißfestigkeit, Handeinreißbarkeit etc. vorgibt und bestimmt. Sobald also der Träger als solches die erforderliche Längsfestigkeit für den spezifischen Anwendungszweck als Wickelband erreicht und zugleich die Handeinreißbarkeit in Querrichtung gegeben ist, ändert im Allgemeinen die aufgebrachte Beschichtung mit dem Klebstoff hieran nichts (mehr).

Tatsächlich sorgen die üblicherweise quer zur Längsrichtung verlaufenden Perforationen und die dadurch definierten Perforationslinien dafür, dass die Handeinreißbarkeit in Querrichtung verbessert wird bzw. überhaupt erst zur Verfügung gestellt wird. Die Handeinreißbarkeit korrespondiert im Bereich der Perforationen bzw. Perforationslinien zu einer Reißfestigkeit in Querrichtung von typischerweise weniger als 10 N. Die Reißfestigkeit wird dabei nach der AFERA-Norm 4007 bestimmt.

Tatsächlich beobachtet man in Folge der Perforationen in der Querrichtung im Allgemeinen eine Abnahme der Reißfestigkeit gegenüber dem Träger aus Vlies ohne Perforationen von wenigstens 10 %, insbesondere 20 % und vorzugsweise 30 % und mehr in der durch die Perforationslinien vorgegebenen Querrichtung. Das heißt, die typischerweise in Querrichtung in bestimmten Abständen eingebrachten Perforationen sorgen entlang der solchermaßen definierten Perforationslinien dafür, dass die Reißfestigkeit des zugehörigen Trägers aus Vlies in Richtung der jeweiligen Perforationslinie um wenigstens 10 %, insbesondere um 20 % und vorzugsweise um 30 % und noch mehr im Vergleich zum nicht perforierten Träger gleicher Ausrüstung sinkt.

Außerdem geht die Erfindung hierbei von der Erkenntnis aus, dass die Größe der Perforationslöcher klein genug bemessen wird, damit es bei der anschließenden Beschichtung mit dem Klebstoff nicht zu einem Durchschlag auf die andere Seite kommt. Außerdem verhindert diese Bemessungsregel, dass die fraglichen Perforationslöcher von dem Klebstoff verstopft werden. Dabei kann an dieser Stelle mit jeglichen denkbaren Klebstoffen gearbeitet werden. Bevorzugt sind sogenannte Klebstoffe auf Hotmelt-Basis, also solche, die in geschmolzenem Zustand auf eine Seite des Trägers aufgebracht werden und danach erkalten. Die Kleberbeschichtung bzw. der an dieser Stelle eingesetzte Schmelzklebstoff ist im Allgemeinen ein solcher auf Basis von Acrylat oder Kautschukbasis.

Außerdem beobachtet man für die Kleberbeschichtung typischerweise ein Flächengewicht zwischen 30 bis 200 g/m² und insbesondere ein Flächengewicht zwischen 50 bis 130 g/m². Dabei kann besonders vorteilhaft mit einer Direktbeschichtung durch bspw. Aufrakeln gearbeitet werden.

Bei dem Träger handelt es sich, wie bereits erläutert, um einen Vliesträger. Dieser Vliesträger mag ein Flächengewicht von 20 g/m² bis 300 g/m² und insbesondere von 40 g/m² bis 100 g/m² aufweisen. Außerdem beläuft sich die Dicke des Vliesträgers typischerweise auf 0,2 bis 2,0 mm. Die Reißkraft in Querrichtung liegt dabei im Allgemeinen im Bereich von 10 N/m oder weniger. Die Reißdehnung in Längsrichtung kann Werte von bis zu 50 % annehmen und ist vorzugsweise im Bereich von 30 % bis 40 % angesiedelt.

Wie bereits erläutert, wird der mechanisch und/oder chemisch verfestigte Träger bzw. Vliesträger perforiert. Dabei kann das Vlies bzw. der Vliesträger chemisch durch ein Bindemittel verfestigt werden. Bei der Verfestigung der einzelnen Fasern des Vliesträgers durch das Bindemittel werden die Fasern bekanntermaßen miteinander adhäsiv verbunden. Um das fragliche Bindemittel zu applizieren, sind verschiedene Methoden denkbar und werden im Rahmen der Erfindung verfolgt.

Besonders bevorzugt ist es, wenn das Bindemittel wenigstens einseitig auf den Träger bzw. Vliesträger appliziert wird. Das kann durch übliche Verfahren wie Sprühen, Walzen, Rakeln oder auch durch Aufdrucken vorgenommen werden. Selbstverständlich liegt es im Rahmen der Erfindung, ergänzende Verfestigungsmaßnahmen vorzusehen, wie bspw. ein nach dem Bindemittelauftrag erfolgendes Kalandrieren oder allgemein Walzen. Meistens sind solche zusätzlichen Methoden jedoch nicht erforderlich.

Anstelle der bereits beschriebenen chemischen Verfestigung des Vlieses bzw. Vliesträgers durch das Bindemittel ist es alternativ oder zusätzlich auch denkbar, dass das Vlies mechanisch durch Übernähen mit Fäden verfestigt wird. In diesem Fall wird ein Nähvlies bzw. Nähwirkvlies realisiert. Dabei kann das Übernähen sowohl mit Längsfäden als auch Querfäden vorgenommen werden.

Im Rahmen der Erfindung hat es sich besonders bewährt und als günstig erwiesen, wenn das Vlies ausschließlich mit Längsfäden übernäht wird, die bspw. eine Fadendichte von weniger als 22 Fäden pro 25 mm Breite des Trägers aufweisen. Durch diese Ausrüstung mit Längsfäden lässt sich das solchermaßen hergestellte Vlies bzw. Nähvlies besonders einfach und problemlos perforieren.

Denn das mechanisch und/oder chemisch verfestigte Vlies wird im Allgemeinen mit Hilfe von heißen Nadeln die eine Temperatur von mehr als 100 °C aufweisen, perforiert. Dabei können die Nadeln auf einer Nadelwalze angeordnet sein. Alternativ hierzu ist es aber auch denkbar, dass die Nadeln an einer Nadelplatte angeordnet sind. In beiden Fällen können die Nadeln in einem bestimmten Muster angeordnet werden, welches bspw. die übernähten Längsfäden des zu perforierenden Trägers ausspart. Das heißt, die die Nadeln tragende Nadelwalze oder auch die die Nadeln tragende Nadelplatte sind jeweils so ausgelegt und gestaltet, dass die Nadeln jeweils Längsstreifen belegen, die untereinander beabstandet sind.

Der Abstand oder Freiraum zwischen diesen einzelnen Längsstreifen auf der Nadelwalze bzw. Nadelplatte ist dabei so bemessen und angeordnet, dass beim Perforieren des chemisch und/oder mechanisch verfestigten Vlieses bzw. Vliesträgers im Bereich der Längsfäden keine Nadeln in den verfestigten Vliesträger eintauchen. Vielmehr finden sich im Bereich der Längsfäden die bereits angesprochenen Freiräume bzw. Abstände zwischen den einzelnen Längsstreifen. Dadurch kommt es beim Perforieren des Vliesträgers nicht zu einem mechanischen Kontakt zwischen den übernähten Längsfäden einerseits und den in den Vliesträger zur Perforation eintauchenden heißen Nadeln andererseits. Die Längsfäden können also nach wie vor ihre die Stabilität und Festigkeit des Vliesträgers erhöhende Wirkung insbesondere in Längsrichtung auch nach dem Perforationsvorgang entfalten.

Selbstverständlich ist es generell auch möglich und liegt im Rahmen der Erfindung, die mit den Nadeln belegten Längsstreifen auf der Nadelwalze bzw.

Nadelplatte so anzuordnen, dass nicht nur Abstände bzw. Freiräume zwischen Längsstreifen beobachtet werden, sondern auch Abstände bzw. Freiräume in Querrichtung, das heißt von Längsstreifen zu Längsstreifen. In diesem Fall wird man die Belegung der Nadelwalze bzw. Nadelplatte mit den Nadeln so wählen, dass im Bereich der Abstände bzw. Freiräume in Querrichtung zusätzlich etwaige Querfäden für das Übernähen des Vliesträgers vorgesehen werden können. Aus Gründen einer einfachen Fertigung wird man jedoch im Regelfall lediglich mit Längsfäden in diesem Kontext arbeiten bzw. kann auf solche Längsfäden natürlich generell verzichten, wenn das Vlies einzig und allein chemisch verfestigt wird.

Wie bereits erläutert, sind die Nadeln auf der Nadelwalze bzw. an der Nadelplatte heiß und verfügen über eine Temperatur von mehr als 100° C. Insbesondere werden sogar Temperaturen von mehr als 150° C beobachtet. Auf diese Weise ist jede heiße Nadel bei der Perforation in der Lage, den Träger bzw. Vliesträger einwandfrei durchdringen zu können. Denn bei solchen Temperaturen schmilzt das Trägermaterial unmittelbar, bei dem es sich typischerweise um einen Kunststoff wie bspw. Polyester, Polypropylen, Polyamid etc. handelt. Generell kann der Vliesträger aber auch unter zusätzlichem Rückgriff auf Viskosefasern wie Baumwollfasern hergestellt werden.

Dabei hat es sich allgemein bewährt, wenn den Nadeln auf der Nadelwalze bzw. Nadelplatte jeweils eine mehr oder minder glatte Gegenwalze bzw. Gegenplatte mit dem dazwischen befindlichen Träger gegenüber liegt. Die Gegenwalze bzw. Gegenplatte mag dabei mit einer Gummierung ausgerüstet werden, in welche die einzelnen Nadeln nach Durchdringen des Trägers eintauchen, und zwar ohne an ihrer Spitze beschädigt zu werden. Zugleich sorgt die betreffende Gegenwalze respektive Gegenplatte dafür, dass der Träger einwandfrei perforiert und zwischen der Nadelwalze respektive Nadelplatte und der Gegenwalze oder Gegenplatte gehalten und auch transportiert werden kann. Dazu lassen sich die betreffende Nadelwalze und Gegenwalze rotierend gegenläufig ebenso antreiben wie die Nadelplatte bzw. Gegenplatte beispielsweise linear.

Bei den Fasern mag es sich sowohl um Stapelfasern als auch Spinnfasern handeln. In sämtlichen Fällen reicht jedenfalls die Temperatur der Nadeln aus, dass das Trägermaterial im Bereich der Nadel schmilzt. Außerdem wird das Trägermaterial durch die jeweilige Nadel gleichzeitig verdrängt, so dass sich durchgängige Löcher im Vliesträger ergeben. Mit dem Herausziehen der Nadeln setzt zugleich im Randbereich der solchermaßen gebildeten Perforationslöcher ein Erkaltungsvorgang ein. Auf diese Weise wird das zuvor im Bereich des Perforationsloches geschmolzene Trägermaterial wieder fest und die Perforation ist dauerhaft im Vliesträger vorhanden. Gleiche Vorteile und Ausprägungen werden selbstverständlich ebenso für den Fall beobachtet, dass die Nadeln Raumtemperatur aufweisen, also nicht beheizt werden.

Der Durchmesser der Nadeln und daraus resultierend der Durchmesser der Perforationslöcher liegt typischerweise zwischen 0,5 mm und 1,5 mm und ist insbesondere im Bereich zwischen 0,9 mm und 1,0 mm angesiedelt. Dadurch führen die Perforationslöcher wunschgemäß zu einer Schwächung des Vliesträgers insbesondere in Querrichtung, was die Handeinreißbarkeit erleichtert. Aus diesem Grund wird man meistens die Nadeln in Querrichtung mit geringerem Abstand als in Längsrichtung anordnen. Beispielsweise ist es denkbar, den Abstand der Nadeln in Längsrichtung ca. doppelt so groß oder mehr als deren Abstand in Querrichtung (jeweils bezogen auf den Träger) einzustellen.

Zugleich ist die Größe der Perforationslöcher klein genug bemessen, damit es bei der anschließenden Beschichtung mit dem Klebstoff nicht zu einem Durchschlag auf die andere Seite kommt bzw. die Löcher gleichsam von dem Klebstoff verstopft werden. Vielmehr ist aufgrund der Kohäsivkräfte im Klebstoff davon auszugehen, dass dieser in die Perforationslöcher nicht oder praktisch nicht eindringt, so dass der Verbrauch an Klebstoff im Vergleich zu herkömmlichen Vliesträgern ohne Perforationslöcher erfindungsgemäß nicht steigt.

Die Anzahl der Nadeln kann eine Dichte von etwa 3/cm² und insbesondere 5/pro cm² und mehr betragen. Im Allgemeinen beträgt die Anzahl der Löcher im Bereich des entsprechend ausgerüsteten Längsstreifen auf der Nadelwalze bzw. an der Nadelplatte im Allgemeinen 10 Löcher pro cm² und mehr. Dadurch wird der Vliesträger mit Perforationslinien ausgerüstet, die in Querrichtung verlaufen und bis auf die Freibereiche mit den dort angeordneten Längsfäden durchgängig ausgebildet sind. Da in Längsrichtung des Vliesträgers nach wie vor die Längsfäden für eine mechanische Stabilisierung sorgen, ist infolge der Perforation nicht mit einer signifikanten Schwächung des Vliesträgers in Längsrichtung zu rechnen.

Gegenstand der Erfindung ist darüber hinaus die Verwendung eines Klebebandes, welches nach dem beschriebenen Verfahren hergestellt worden ist, und zwar als Wickelband zum Umwickeln von Kabeln in Automobilen.

Im Ergebnis werden ein Verfahren zur Herstellung eines Klebebandes, das entsprechend produzierte Klebeband sowie die Verwendung des Klebebandes als Wickelband zum Umwickeln von Kabeln in Automobilen vorgestellt, die sich generell durch ein insgesamt kostengünstiges Produkt und besondere Eignung für den beschriebenen Verwendungszweck auszeichnen. Das wird im Kern durch die Kombination der chemischen und/oder mechanischen Verfestigung des Vliesträgers mit den zusätzlich eingebrachten Perforationen als Ausrüstung nach der Herstellung des Vliesträgers erreicht. Hierin sind die wesentlichen Vorteile zu sehen.

Im Folgenden wird die Erfindung anhand einer lediglich ein Ausführungsbeispiel darstellenden Zeichnung näher erläutert. Die einzige Figur zeigt ein nach dem erfindungsgemäßen Verfahren hergestelltes Klebeband.

In den Figuren ist ein Klebeband schematisch dargestellt, von dem man primär einen perforierten Träger 1 erkennt. Dieser Träger 1 ist in Aufsicht dargestellt. Auf seine Rückseite ist eine Beschichtung mit Klebstoff aufgebracht, die nicht gezeigt ist.

Der Träger 1 ist als perforierter Vliesträger ausgebildet. Dazu ist der Träger 1 zunächst mechanisch und/oder chemisch verfestigt worden. Im Ausführungsbeispiel ist der Träger 1 durch Übernähen mit Hilfe von Längsfäden 2 verfestigt worden. Es handelt sich folglich um einen Nähvliesträger. Zu diesem Zweck sind im Ausführungsbeispiel die Längsfäden 2 mit einer Fadendichte < 22 Fäden/25 mm Breite des Trägers 1 auf den Träger 1 durch Übernähen aufgebracht worden. Dabei wird im Regelfall mit einer Stichlänge der Längsfäden 2 von ca. 3 mm und mehr gearbeitet.

Der solchermaßen durch Übernähen mechanisch verfestigte Träger 1 wird anschließend perforiert. Dazu wird der mechanisch verfestigte Träger 1 mit Hilfe von Nadeln 3 bearbeitet, die in der einzigen Figur grundsätzlich angedeutet sind. Die Nadeln 3 formen insgesamt Längsstreifen 4. Zwischen den Längsstreifen 4 sind jeweils Abstände bzw. Freiräume 5 in Längsrichtung des Trägers 1 vorgesehen.

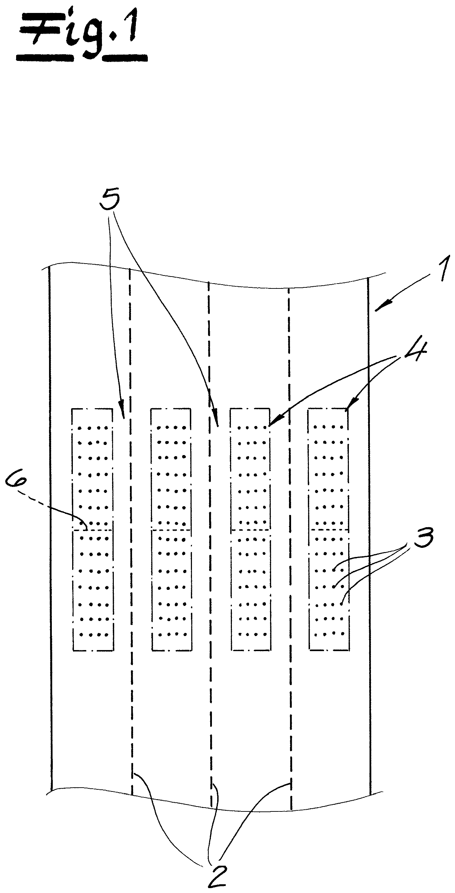

Dabei ist die Auslegung insgesamt so getroffen, dass die Nadeln 3 auf einer Nadelwalze oder auch an einer Nadelplatte angeordnet sind und dabei eine Dichte von wenigstens 3/cm² aufweisen. Außerdem weisen die Nadeln 3 ein bestimmtes Muster auf der Nadelwalze bzw. an der Nadelplatte auf, welches sich in den Längsstreifen 4 in der Figur 1 niederschlägt. Man erkennt, dass der Abstand der Nadeln 3 in Längsrichtung etwa doppelt so groß wie ihr Abstand in Querrichtung ausgelegt ist.

Tatsächlich mögen die einzelnen Längsstreifen 4 in der Figur 1 zu einer Abrollbewegung der nicht dargestellten Nadelwalze unter Berücksichtigung einer Umdrehung gehören. Dabei sind die Nadeln 3 auf der Nadelwalze so angeordnet, dass dort jeweils die Längsstreifen 4 ausgebildet werden, und zwar mit den dazwischen angeordneten Abständen bzw. Freiräumen 5. Man erkennt, dass die Abstände bzw. Freiräume 5 gleich groß zwischen den einzelnen Längsstreifen 4 ausgebildet sind. Außerdem finden sich die Abstände bzw. Freiräume 5 immer in Bereichen, in welchen die übernähten Längsfäden 2 auf dem Träger 1 angeordnet sind. D. h., dass Muster der Nadeln 3 auf der Nadelwalze bzw. an der Nadelplatte ist so ausgelegt und angeordnet, dass die übernähten Längsfäden 2 des zu perforierenden Trägers 1 ausgespart werden, weil im Bereich der Längsfäden 2 die Abstände bzw. die Freiräume 5 zwischen den einzelnen Längsstreifen 4 bei einem Perforationsvorgang platziert sind. D. h., die Nadelwalze bzw. Nadelplatte und der Träger 1 müssen beim Perforieren gegeneinander ausgerichtet werden, bspw. in Bezug auf eine gemeinsame Referenzlinie in Längsrichtung, bei welcher es sich um eine oder beide Längskanten des Trägers 1 handeln kann.

Auf diese Weise sorgen die Nadeln 3 an der Nadelwalze bzw. der Nadelplatte beim Perforieren des Längsträgers 1 in dessen Längserstreckung dafür, dass lediglich die Bereiche zwischen den übernähten Längsfäden 2 perforiert werden, allerdings im Bereich der Längsfäden 2 keine Perforation stattfindet, weil dort die Nadeln 3 auf der Nadelwalze ausgespart sind respektive sich die Abstände bzw. Freiräume 5 finden. Dadurch kommt es bei der Perforation nicht zu einer Kollision zwischen den heißen Nadeln 3 und den Längsfäden 2, die auf diese Weise auch nach dem Perforationsvorgang in ihrer Festigkeit nicht beeinträchtigt sind.

Gleichwohl finden sich durchgängige Perforationslinien 6 insbesondere in Quererstreckung des Trägers 1, die zwischen sich lediglich im Bereich der Abstände bzw. Freiräume 5 ausgespart sind. Entlang dieser Perforationslinien 6 kann das solchermaßen hergestellte Klebeband problemlos quer eingerissen werden, wobei typischerweise Reißkräfte von weniger als 10 N/cm beobachtet werden.

Dadurch ist das hergestellte Klebeband für Anwendungen als Wickelband zum Umwickeln von Kabeln in Automobilen besonders prädestiniert. Das gilt besonders vor dem Hintergrund, dass als Fasern für die Herstellung des Trägers bzw. Vliesträgers 1 solche auf Basis von Polyester, Polypropylen, Polyamid usw. zum Einsatz kommen. Darüber hinaus kann es sich bei dem Vlies um ein Spinnvlies oder Stapelfaservlies handeln. Die durchgängigen Längsfäden 2 sorgen in der Längsrichtung für die notwendige Festigkeit und Reißdehnung, welche im Allgemeinen weniger als 30 % und insbesondere weniger als 20 % beträgt. Trotzdem ist durch die realisierten Perforationslinien 6 die gewünschte Handeinreißbarkeit in Querrichtung gegeben. Hierin sind die wesentlichen Vorteile zu sehen.

## Patentansprüche

1. Verwendung eines Klebebandes, wonach
- zunächst ein Träger (1) aus Vlies mechanisch und/oder chemisch verfestigt wird,
- der Träger (1) dann im Anschluss perforiert wird, oder umgekehrt, wonach ferner
- das mechanisch und/oder chemisch verfestigte Vlies mithilfe von auf einer Nadelwalze oder an einer Nadelplatte angeordneten heißen Nadeln (3), die eine Temperatur von mehr als 100 °C aufweisen, perforiert wird, wobei
- die die Nadeln (3) tragende Nadelwalze oder die die Nadeln (3) tragende Nadelplatte jeweils so ausgelegt und gestaltet sind, dass die Nadeln (3) jeweils Längsstreifen belegen, die untereinander beabstandet sind sowie
- die Nadeln (3) in Querrichtung des Trägers (1) mit geringerem Abstand als in Längsrichtung angeordnet sind, und wonach
- der solchermaßen perforierte sowie verfestigte Träger (1) abschließend zumindest einseitig mit einem Klebstoff beschichtet wird,
als Wickelband zum Umwickeln von Kabeln in Automobilen.

2. Verwendung nach Anspruch 1, **dadurch gekennzeichnet, dass** das Vlies chemisch durch ein Bindemittel verfestigt wird.

3. Verwendung nach Anspruch 2, **dadurch gekennzeichnet, dass** das Bindemittel wenigstens einseitig durch Sprühen, Walzen oder Rakeln auf dem Träger (1) appliziert wird.

4. Verwendung nach einem der Ansprüche 1 bis 3, **dadurch gekennzeichnet, dass** das Vlies mechanisch durch Übernähen mit Fäden (2) verfestigt wird.

5. Verwendung nach Anspruch 4, **dadurch gekennzeichnet, dass** das Vlies mit Längsfäden (2) einer Fadendichte < 22 Fäden/25 mm Breite des Trägers (1) übernäht wird.

6. Verwendung nach einem der Ansprüche 1 bis 5, **dadurch gekennzeichnet, dass** die Nadeln (3) auf einer Nadelwalze mit einer Dichte von mindestens 3/cm² angeordnet sind.

7. Verwendung nach Anspruch 5 oder 6, **dadurch gekennzeichnet, dass** die Nadeln (3) in einem bestimmten Muster angeordnet sind, welches bspw. die übernähten Längsfäden (2) des zu perforierenden Trägers (1) ausspart.

8. Verwendung nach einem der Ansprüche 1 bis 7, **dadurch gekennzeichnet, dass** die Nadeln (3) eine Temperatur von mehr als 150° C aufweisen.

## Claims

1. Use of an adhesive tape, according to which
- first a carrier (1) made of a nonwoven material is strengthened mechanically and/or chemically,
- the carrier (1) is then perforated, or the order is reversed, according to which further
- the mechanically and/or chemically strengthened nonwoven material is perforated using hot needles (3) having a temperature above 100 °C which are arranged on a needle roll or needle plate,
- the needle roll supporting the needles (3) or the needle plate supporting the needles (3) is embodied and designed in each case so that the needles (3) occupy lengthwise rows that are arranged at a distance from each other, and
- the needles (3) are arranged with less distance between them in the transverse direction of the carrier (1) than in the lengthwise direction, and according to which
- the carrier (1) that has been perforated and strengthened in this way is finally coated with an adhesive on at lease one side thereof, as wrapping tape for wrapping cables in automobiles.

2. Use according to Claim 1, **characterized in that** the nonwoven material is strengthened chemically by a binding agent.

3. Use according to Claim 2, **characterized in that** the binding agent is applied to at least one side of the carrier (1) by spraying, rolling or with a doctor blade.

4. Use according to any one of Claims 1 to 3, **characterized in that** the nonwoven material is strengthened by overstitching with threads (2).

5. Use according to Claim 4, **characterized in that** the nonwoven material is overstitched with longitudinal threads (2) having a thread density < 22 threads/25 mm of the width of the carrier (1).

6. Use according to any one of Claims 1 to 5, **characterized in that** the needles (3) are arranged on a needle roll with a density of at least 3/cm².

7. Use according to Claim 5 or 6, **characterized in that** the needles (3) are arranged in a certain pattern, which omits for example the overstitched longitudinal threads (2) of the carrier (1) that is to be perforated.

8. Use according to any one of Claims 1 to 7, **characterized in that** the needles (3) have a temperature greater than 150 °C.

## Revendications

1. Utilisation d'une bande adhésive en tant que bande d'enroulement pour enrouler des câbles dans les automobiles, selon laquelle
- un support (1) en matériau non-tissé est d'abord solidifié mécaniquement et/ou chimiquement,
- le support (1) est ensuite perforé ou inversé, selon laquelle en plus
- le matériau non-tissé solidifié mécaniquement et/ou chimiquement est perforé à l'aide d'aiguilles (3) chaudes disposées sur un hérisson ou sur une plaque d'aiguilles, qui comportent une température de plus de 100 °C,
- le hérisson supportant les aiguilles (3) ou la plaque d'aiguilles supportant les aiguilles (3) étant respectivement conçus et configurés de telle sorte que les aiguilles (3) garnissent respectivement des bandes longitudinales qui sont à distance l'une de l'autre et
- les aiguilles (3) étant disposées dans la direction transversale du support (1) à une distance plus faible que dans la direction longitudinale et selon laquelle
- le support (1) ainsi perforé et solidifié est enduit au moins d'un côté avec une colle.

2. Utilisation selon la revendication 1, **caractérisée en ce que** le matériau non-tissé est solidifié chimiquement par un liant.

3. Utilisation selon la revendication 2, **caractérisée en ce que** le liant est appliqué sur le support (1) au moins unilatéralement par pulvérisation, laminage ou raclage.

4. Utilisation selon l'une quelconque des revendications 1 à 3, **caractérisée en ce que** le matériau non-tissé est solidifié mécaniquement par surpiquage avec des fils (2).

5. Utilisation selon la revendication 4, **caractérisée en ce que** le matériau non-tissé est surpiqué avec des fils longitudinaux (2) d'une densité de fils < 22 fils/25 mm largeur du support (1).

6. Utilisation selon l'une quelconque des revendications 1 à 5, **caractérisée en ce que** les aiguilles (3) sont disposées sur un hérisson avec une densité de moins de 3/cm².

7. Utilisation selon la revendication 5 ou 6, **caractérisée en ce que** les aiguilles (3) sont disposées dans un certain modèle, lequel épargne par exemple les fils longitudinaux surpiqués (2) du support (1) à perforer.

8. Utilisation selon l'une quelconque des revendications 1 à 7, **caractérisée en ce que** les aiguilles (3) comportent une température de plus de 150 °C.
